Europäisches Patentamt

European Patent Office

Office européen des brevets

(19)

(11) Veröffentlichungsnummer: **0 134 031**
**A2**

## EUROPÄISCHE PATENTANMELDUNG

(21) Anmeldenummer: 84109590.4

(22) Anmeldetag: 11.08.84

(51) Int. Cl.⁴: **A 01 M 25/00**

(30) Priorität: **20.08.83 DE 3330118**

(43) Veröffentlichungstag der Anmeldung: **13.03.85**
**Patentblatt 85/11**

(84) Benannte Vertragsstaaten: **AT BE CH FR GB IT LI LU NL SE**

(71) Anmelder: **WESTO Kunststofftechnik GmbH, Industriegebiet Bergheim, D-4939 Steinheim 3 (DE)**

(72) Erfinder: **Taake, Berthold, Leopoldstalerstrasse 230, D-4934 Horn-Bad Meinberg 1 (DE)**

(74) Vertreter: **Schirmer, Siegfried, Osningstrasse 10, D-4800 Bielefeld 1 (DE)**

(54) **Auslegebehälter kreisförmiger Form zur Aufnahme von Giftködern.**

(57) Der weiterentwickelte Auslegebehälter ist sowohl zur Aufnahme für rieselfähige Giftköder, als auch für nagbare, also feste Giftköder (7) geeignet. Der Auslegebehälter besitzt ein Höchstmass an Sicherheit gegen Berühren oder Entnahme des Giftköders (7) durch Menschen oder Tiere. Äusserst vorteilhaft ist die bei Bedarf mögliche Nachfüllung des Giftköders (7).

Hierzu ist einer der beiden Giftköderkammerverschlüsse (2) lösbar angeordnet. Der Auslegebehälter wird durch zwei symmetrische Halbschalen gebildet, die durch entsprechende Ausbildung ihrer Ränder zusammenfügbar sind. Der für die Aufnahme von rieselfähigem Giftköder vorgesehene Giftköderbehälter bildet nach dem Einsetzen der Einzelteile durch Ultraschallverschweissung eine dicht und fest angeschlossene Einheit.

Der Abstand zwischen Oberkante Laufsteg (12) und der diesem Laufsteg (12) gegenüberliegenden Begrenzung der Nageöffnung (6) ist so bemessen, dass Ratten im aufgerichteten Zustand am Giftköder (7) nagen können.

Dipl.-Ing. Siegfried Schirmer
Zugelassener Vertreter
vor dem Europäischen Patentamt

: : .. .. • 4809 Bielefeld 1 - ....
Telefon (05 21) 29 57 62
450/16-20
10.08.1984

0134031

Anmelder:
WESTO Kunststofftechnik GmbH
Industriegebiet Bergheim
4939 Steinheim 3

## Auslegebehälter kreisförmiger Form zur Aufnahme von Giftködern

Die Erfindung betrifft einen Auslegebehälter kreisförmiger Form zur Aufnahme von Giftködern zur Bekämpfung von Ungeziefer, insbesondere Ratten, mit zwei sich gegenüberliegenden Einschlupföffnungen in der Außenwandung und einer mittig angeordneten Giftköderkammer zur Aufnahme eines den Giftköder enthaltenden Giftköderträgers, wobei zwischen der zwei Nage- bzw. Giftköder-Entnahmeöffnungen aufweisenden Innenwandung des Auslegebehälters und dem Giftköderträger ein um den Giftköderträger führender schlauchförmiger Lauftunnel mit Laufstegen angeordnet ist und die Giftköderkammer oben und unten fest verschlossen ist und an den äußeren Enden des Giftköderträgers und an der zum Giftköderträger weisenden Innenwandung des Lauftunnels Sicherheitsringlippen bzw. Ringprofilierungen angeordnet sind.

Zur Bekämpfung von Ungeziefer, insbesondere Ratten, sind bereits verschiedene Behälter und Verfahren bekannt. Im allgemeinen werden Giftköder durch Spezialkräfte ausgelegt. Es bereitet Schwierigkeiten, die Giftköder so auszulegen, daß sie für Menschen und Haustiere unerreichbar sind. Eine 100%ige Erreichung an Sicherheit gegen unbeabsichtigte Benutzung oder Berührung ist nicht gegeben. Rattengifte werden in Streuform als Pulver oder als vergiftete Körner, in fester Form in Talg oder Paraphin eingearbeitet verwendet,

- 2 -

-

0134031

wobei getränkte Seile oder eine geschlossene Form ähnlich der Meisenringe bekannt sind.

Bei Verwendung besonderer Auslegebehälter müssen diese vor ihrer Aufstellung am Einsatzort vom jeweiligen Aufsteller mit den Giftstoffen oder den Giftködern gefüllt werden. Eine Sicherung des eingebrachten Giftes gegen Herausfallen aus dem Auslegebehälter, z.B. beim Umkippen oder Verdrehen, ist nicht gegeben.

Diese Nachteile werden bei einem Auslegebehälter zur Aufnahme von Giftködern nach dem DE-GM G 82 13 193.7 vermieden. Bei diesem bekannten Auslegebehälter, der zugleich als Verkaufsbehälter fungiert, ist der Giftköder unberührbar gelagert, so daß weder beim Kauf, dem Transport, der Lagerung, dem Verlegen oder in der Einsatzphase eine Berührung oder ein Herausfallen des Giftköders möglich ist. Im Auslegebehälter lagern nagbare gepreßte oder gegossene Giftköder in einem in einer Giftköderkammer zentral angeordneten Giftköderträger, der Spulentrichterform aufweist. Zur sicheren Aufnahme der beim Nagen evtl. herabfallenden Krumen besitzt der Auslegebehälter eine Sicherheitsnische. Die Giftköderkammer ist oben und unten mit Kammerverschlußdeckeln über eine Niethülse fest verschlossen.

Obwohl dieser Auslegebehälter ein Höchstmaß an Sicherheit gegen Berühren oder Entnahme des Giftköders durch Menschen oder Haustiere garantiert, ist ein ökonomischer Einsatz nicht gegeben. Durch den festen Verschluß der Giftköderkammer über eine Niethülse ist ein Nachfüllen mit einem nagbaren Giftköder nicht möglich. Die Verwendung von rieselfähigem Giftköder ist nicht möglich. Da der Auslegebe-

-

0134031

behälter im Spritzgußverfahren hergestellt wird, sind relativ aufwendige Werkzeuge erforderlich, was sich auf den Preis auswirkt.

Der Erfindung liegt die Aufgabe zugrunde, einen Auslegebehälter der aufgezeigten Gattung so auszubilden, daß äußerst einfach sowohl nagbare, als auch rieselfähige Giftköder nachfüllbar sind und außerdem die Herstellung des Auslegebehälters im Spritzgußverfahren vereinfacht wird und dadurch der Auslegebehälter insgesamt wesentlich kostengünstiger ist.

Erfindungsgemäß wird diese Aufgabe dadurch gelöst, daß wahlweise ein Giftköderträger für nagbare Giftköder oder für rieselfähige Giftköder einsetzbar ist und einer der beiden Giftköderkammerverschlüsse lösbar angeordnet ist, vorzugsweise mittels Verschraubung. In Ausgestaltung der Erfindung wird der Auslegebehälter durch zwei symmetrische Halbschalen gebildet, die an ihren Verbindungsrändern mit Profilierungen versehen sind, wobei der Verbindungsrand jeder Halbschale einen in gleicher Höhe umlaufenden Randteil aufweist, an dem jeweils außen ein hervorstehender und ein zurückgesetzter Randteil angeschlossen sind. Zweckmäßigerweise verlaufen der hervorstehende und der zurückgesetzte Randteil jeweils auf 50 % des Umfangs. Auf der Innenseite jeder Halbschale können im Bereich des hervorstehenden Randteils mindestens zwei Haltestege angeordnet sein, die über den in gleicher Höhe umlaufenden Randteil des Verbindungsrandes reichen und im Randbereich der Einschlupföffnungen angeordnet sind.

- 4 -

0134031

Damit die Ratten im aufgerichteten Zustand am Giftköder nagen können, sollte der Abstand zwischen Oberkante Laufsteg und der diesem Laufsteg gegenüberliegenden Begrenzung der Nageöffnung entsprechend bemessen sein, vorzugsweise sollte dieser Abstand ca. 85 mm betragen.

Gemäß einer Variante dient als Giftköderträger ein zur Aufnahme von rieselfähigem Giftköder einsetzbarer Giftköderbehälter, der zweckmäßigerweise aus zwei Einzelteilen besteht, die nach dem Einsetzen in die Giftkammer des Auslegebehälters mittels Ultraschallverschweißung miteinander verbindbar sind. Vorteilhafte Ausgestaltungen des Erfindungsgedankens ergeben sich aus den weiteren Unteransprüchen.

Durch die Erfindung ist ein Verkaufs- und Auslegebehälter geschaffen, der sowohl für nagbare, als auch für rieselfähige Giftköder verwendbar ist, wobei ohne Schwierigkeiten ein Ersatz des verbrauchten Giftköders möglich ist. Da der Auslegebehälter aus zwei symmetrischen Halbschalen gebildet ist, die durch die aufgezeigte Ausbildung der Ränder ein einfaches Zusammenfügen bei Erreichung einer ausreichenden Festigkeit für den Transport und im Gebrauch ermöglichen, wird die Herstellung des Auslegebehälters wesentlich vereinfacht und daher verbilligt. Die Verwendung von rieselfähigem Giftköder ist gegenüber nagbarem Giftköder billiger. Außerdem wird rieselfähiger Giftköder von Ratten besser angenommen, als nagbarer Giftköder. Der für die Aufnahme von rieselfähigem Giftköder vorgesehene Giftköderbehälter bildet nach dem Einsetzen der zwei Einzelteile in die vorhandene Giftköderkammer durch Ultraschallverschweißung eine dicht und fest an die vorhandenen Sicherheitsringlippen angeschlossene Einheit.

- 5 -

0134031

Ein Ausführungsbeispiel der Erfindung ist in der Zeichnung dargestellt und wird im folgenden näher beschrieben. Es zeigen:

Fig. 1 einen vertikalen Schnitt durch einen Auslegebehälter nach Linie A - B der Fig. 2;

Fig. 2 einen horizontalen Schnitt durch einen Auslegebehälter nach Linie C - D der Fig. 1;

Fig. 3 wie Fig. 1, jedoch mit eingesetztem Giftköderbehälter zur Aufnahme von rieselfähigem Giftköder und

Fig. 4 einen Schnitt (schematisch) durch eine Verbindungsstelle der Halbschalen.

Die Einschlupföffnungen 3 des eine kreisförmige Form besitzenden Auslegebehälters sind durch zwei fest angeordnete Verschlüsse 4 verschlossen. Vor der Verlegung werden die Verschlüsse 4 eingestochen oder eingedrückt und herausgezogen. Im Randbereich dieser Einschlupföffnungen 3 ist beidseitig je ein Haltesteg 29 angeordnet, die gleichzeitig als Verstärkungssteg dienen. Die Haltestege 29 reichen über den umlaufenden Randteil 26 des Verbindungsrandes hinaus.

Durch eine der zwei gegenüberliegenden Einschlupföffnungen 3 gelangt die Ratte in den schlauchringförmigen Lauftunnel 5 und durch eine der zwei gegenüberliegenden, um 90° gegenüber den Einschlupföffnungen 3 versetzt angeordneten Nageöffnungen 6 bzw. Giftköderentnahmeöffnungen an einen in einem Giftköderträger angeordneten nagbaren Giftköder 7 oder an den mit rieselfähigem Giftköder gefüllten Giftköderbehälter 13.

0134031

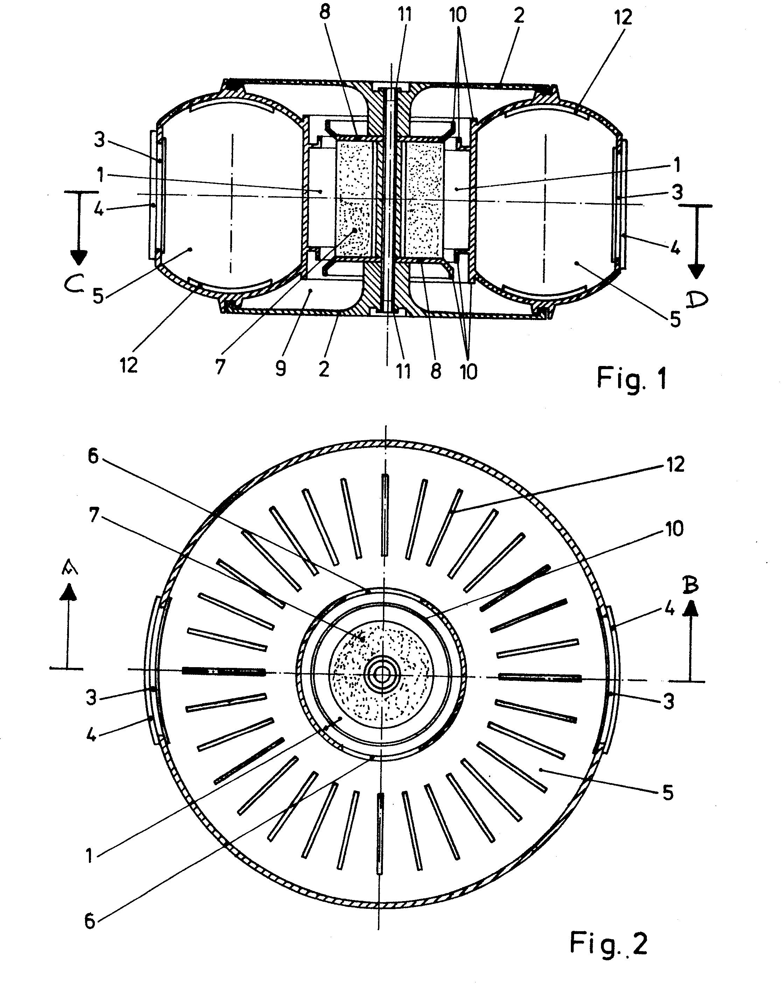

Gemäß Fig. 1 ist der Giftköderträger 8 zentral in der mittig angeordneten Giftköderkammer 1 angeordnet, wobei der obere und der untere Abschluß des Giftköderträgers 8 parallel zur Horizontalachse verläuft. Die Giftköderkammer 1 ist oben und unten mit Kammerverschlußdeckeln 2 über eine Schraubverbindung 11 fest verschlossen. Da von dem nagbaren gepreßten oder gegossenen Giftköder 7 beim Nagen Krumen herabfallen können, ist zur sicheren Aufnahme derselben eine Sicherheitsnische 9 angeordnet. Infolge der Form des Giftköderträgers 8 und der in die Giftkammer 1 hineinragenden Sicherheitsringlippen 10, die an den äußeren Enden des Giftköderträgers 8 und an der zum Giftköderträger 8 weisenden Wandung des Lauftunnels 5 angeordnet sind, können beim Verkanten oder Verdrehen des Auslegebehälters keine Krumen aus der Giftköderkammer 1 herausgelangen. Durch die am Boden des Lauftunnels 5 angeordneten hervorstehenden Laufstege 12 wird das Fortbewegen der Ratte auf insbesondere glattem Kunststoff verbessert und gleichzeitig ein evtl. Heraustragen von Krumen des Giftköders 7 aus den Einschlupföffnungen 3 verhindert.

Die Giftköderkammer 1 kann durch einen aus einem durchsichtigen Material bestehenden Verschlußdeckel 2 zur Kontrolle des Giftköders 7 eingesehen werden. Im Einsatz sollte die mit dem durchsichtigen Verschlußdeckel 2 versehene Seite unten liegen, damit der Neigung der Ratte nach Dunkelheit entsprochen wird. Der eine reflektierende Oberfläche aufweisende andere Kammerdeckel 2 ermöglicht ein schnelles Auffinden des Auslegebehälters in der Dunkelheit.

Der Auslegebehälter ist im Spritzgußverfahren hergestellt und besteht aus zwei symmetrischen Halbschalen 25, 25' aus unzerbrechlichem Kunststoff, die an ihren Verbindungsrän-

0134031

dern mit Profilierungen 26;27;28;29 versehen sind. Der Verbindungsrand jeder Halbschale 25; 25' weist einen in gleicher Höhe umlaufenden Randteil 26 auf, an dem jeweils außen ein hervorstehender Randteil 27 und ein zurückgesetzter Randteil 28 angeschlossen sind, wobei beide Randteile 27; 28 jeweils auf 50% des Umfangs verlaufen.

Der in Fig. 1 mit x bezeichnete Abstand zwischen Oberkante Laufsteg 12 und der diesem Laufsteg 12 gegenüberliegenden Begrenzung der Nageöffnung 6 ist so bemessen, daß eine Ratte im aufgerichteten Zustand am Giftköder 7 nagen kann. Als zweckmäßig hat sich ein Abstand x = 85 mm ergeben.

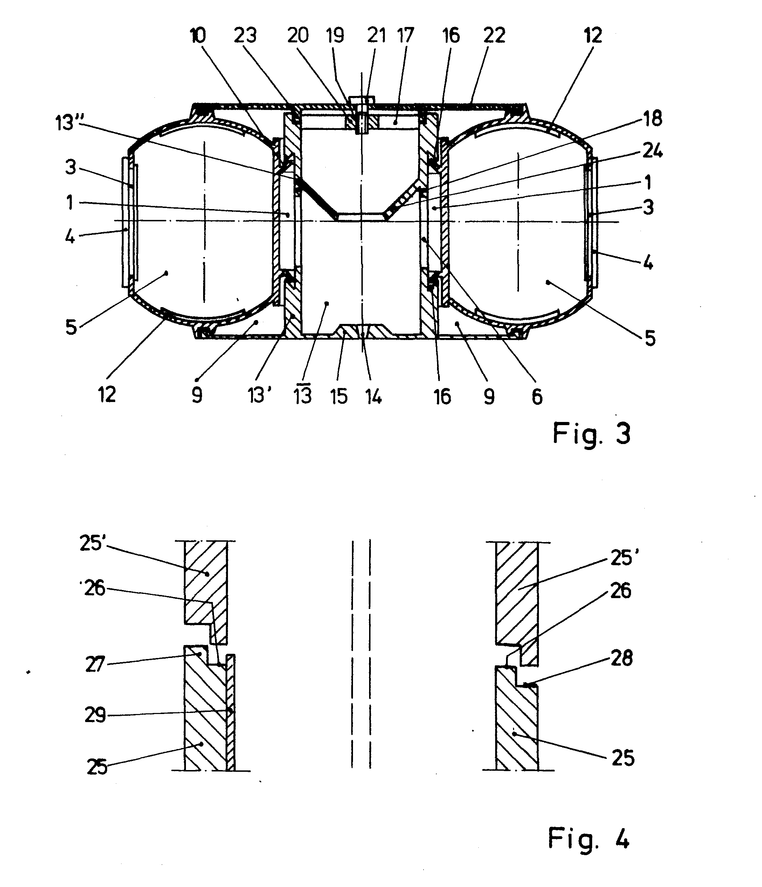

Zur Aufnahme von rieselfähigem Giftköder dient der gemäß Fig. 3 in die Giftköderkammer 1 eingesetzte Giftköderbehälter 13. Um den Giftköderbehälter 13 in die Giftköderkammer 1 einsetzen zu können, ist er zweiteilig ausgebildet und wird erst nach dem Einsetzen der beiden Teile 13'; 13'' mittels Ultraschallverschweißung 18 zu einer Einheit zusammengefügt. Im unteren Teil 13' des Giftköderbehälters 13 sind die beiden Giftköder-Entnahmeöffnungen 6 angeordnet. Um den Giftköderbehälter fest an eine Unterlage anschließen zu können, besitzt der Boden eine mittige Ausnehmung 14, um die eine Verstärkung 15 verläuft.

Auf der inneren Seite des oberen Teils 13'' des Giftköderbehälters 13 ist ein Schütttrichter 24 angeordnet, der nach unten konisch verläuft. Zur Erhöhung der Eigenstabilität, vor allem aber zum dichten Anschluß eines Klarsichtdeckels 22 ist im oberen Teil 13'' des Giftköderbehälters 13 bündig mit der oberen Begrenzung der Umfangswandung ein Steg 17 eingespritzt. Zum Anschluß des Klarsichtdeckels 22 mittels Verschraubung 21 ist im Steg 17 eine mittige Öffnung 19

0134031

mit einer umlaufenden Verstärkung 2o angeordnet. Der Deckel 22 besitzt an seinem äußeren Rand eine untere Nase 23, die zur Seitenführung beim Aufsetzen auf den Giftköderbehälter 13 dient. Zur Herstellung eines festen Sitzes des Giftköderbehälters 13 in der Giftköderkammer 1 dienen die an der Außenseite des unteren und des oberen Teiles 13'; 13'' angeordneten Ringprofilierungen 16, die in die an der zum Giftköderbehälter weisenden Innenwandung des Lauftunnels 5 angeordneten Sicherheitsringlippen 10 einsetzbar sind.

Hierzu weisen die am unteren Teil 13' angeordnete Ringprofilierung 16 nach oben und die am oberen Teil 13'' angeordnete Ringprofilierung 16 nach unten.

Aufstellung der Bezugszeichen:
(450/16-20)

0134031

1   Giftköderkammer

2   Kammerverschlußdeckel

3   Einschlupföffnung

4   Einschlupföffnungsverschluß

5   Lauftunnel

6   Nageöffnung  bzw. Giftköder-Entnahmeöffnung

7   Giftköder (nagbar)

8   Giftköderträger

9   Sicherheitsnische

10  Sicherheitsringlippen

11  Verschraubung für 2

12  Laufstege

13  Giftköderbehälter

13'  unterer Teil von 13

13''  oberer Teil von 13

14  Ausnehmung im Boden

15  Verstärkung von 14

16  Profilierung

17  Steg

18  Schweißnaht (Ultraschallverschweißung)

19  Öffnung in 17

20  Verstärkung um 19

21  Verschraubung

22  Klarsichtdeckel

23  Nase von 22

24  Schütttrichter

25  Halbschale

25'  Halbschale

26  Randteil gleicher Höhe

27      "      hervorstehend

28      "      zurückgesetzt

29  Haltesteg

Patentanwalt
Dipl.-Ing. Siegfried Schirmer
Zugelassener Vertreter
vor dem Europäischen Patentamt

- 9 -

. 4800 Bielefeld 1
Telefon (05 21) 29 57 62
450/16-20
10.03.1984
0134031

Anmelder:
WESTO Kunststofftechnik GmbH
Industriegebiet Bergheim
4939 Steinheim 3

Patentansprüche:

1. Auslegebehälter kreisförmiger Form zur Aufnahme von Giftködern zur Bekämpfung von Ungeziefer, insbesondere Ratten, mit zwei sich gegenüberliegenden Einschlupföffnungen in der Außenwandung und einer mittig angeordneten Giftköderkammer zur Aufnahme eines den Giftköder enthaltenden Giftköderträgers, wobei zwischen der zwei Nage- bzw. Giftköder-Entnahmeöffnungen aufweisenden Innenwandung des Auslegebehälters und dem Giftköderträger ein um den Giftköderträger führender schlauchförmiger Lauftunnel mit Laufstegen angeordnet ist und die Giftköderkammer oben und unten fest verschlossen ist und an den äußeren Enden des Giftköderträgers und an der zum Giftköderträger weisenden Innenwandung des Lauftunnels Sicherheitsringlippen bzw. Ringprofilierungen angeordnet sind, dadurch gekennzeichnet, daß wahlweise ein Giftköderträger (8;13) für nagbare Giftköder (7) oder für rieselfähige Giftköder einsetzbar ist und einer der beiden Giftköderkammerverschlüsse (2;22) lösbar angeordnet ist, vorzugsweise mittels Verschraubung (11;21).

2. Auslegebehälter nach Anspruch 1, gekennzeichnet durch zwei symmetrische Halbschalen (25;25'), die an ihren Verbindungsrändern mit Profilierungen (26;27;28;29) versehen sind.

- 10 -

0134031

3. Auslegebehälter nach Anspruch 1 oder 2, dadurch gekennzeichnet, daß der Verbindungsrand jeder Halbschale (25; 25') einen in gleicher Höhe umlaufenden Randteil (26) aufweist, an dem jeweils außen ein hervorstehender (27) und ein zurückgesetzter Randteil (28) angeschlossen sind.

4. Auslegebehälter nach einem der Ansprüche 1 bis 3, dadurch gekennzeichnet, daß der hervorstehende (27) und der zurückgesetzte Randteil (28) jeweils auf 50 % des Umfangs verlaufen.

5. Auslegebehälter nach einem der Ansprüche 1 bis 4, dadurch gekennzeichnet, daß auf der Innenseite jeder Halbschale (25;25') im Bereich des hervorstehenden Randteils (27) mindestens zwei Haltestege (29) angeordnet sind.

6. Auslegebehälter nach Anspruch 5, dadurch gekennzeichnet, daß die Haltestege (29) über den in gleicher Höhe umlaufenden Randteil (26) des Verbindungsrandes reichen.

7. Auslegebehälter nach einem der Ansprüche 1 bis 6, dadurch gekennzeichnet, daß der obere und der untere Abschluß des Giftköderträgers (8) parallel zur Horizontalachse verläuft.

8. Auslegebehälter nach einem der Ansprüche 1 bis 7, dadurch gekennzeichnet, daß der in den Giftköderträger (8) einsetzbare nagbare Giftköder (7) mehreckig oder mit Außenprofilierungen versehen ist.

9. Auslegebehälter nach Anspruch 8, dadurch gekennzeichnet, daß die Außenprofilierungen des nagbaren Giftköders (7) eckig verlaufen.

0134031

10. Auslegebehälter nach einem der Ansprüche 1 bis 9, dadurch gekennzeichnet, daß der Abstand zwischen Oberkante Laufsteg (12) und der diesem Laufsteg (12) gegenüberliegenden Begrenzung der Nageöffnung (6) so bemessen ist, daß eine Ratte im aufgerichteten Zustand am Giftköder (7) nagen kann.

11. Auslegebehälter nach Anspruch 10, dadurch gekennzeichnet, daß der Abstand (x) zwischen Oberkante Laufsteg (12) und der diesem Laufsteg (12) gegenüberliegenden Begrenzung der Nageöffnung (6) ca. 85 mm beträgt.

12. Auslegebehälter nach einem der Ansprüche 1 bis 6, dadurch gekennzeichnet, daß der Giftköderträger (8) zur Aufnahme von rieselfähigem Giftköder als einsetzbarer Giftköderbehälter (13) ausgebildet ist.

13. Auslegebehälter nach Anspruch 12, dadurch gekennzeichnet, daß der Giftköderbehälter (13) aus zwei Einzelteilen (13'; 13'') gebildet ist.

14. Auslegebehälter nach Anspruch 12 oder 13, dadurch gekennzeichnet, daß die beiden Teile (13'; 13'') des Giftköderbehälters (13) mittels Ultraschallverschweißung (18) miteinander verbunden sind.

15. Auslegebehälter nach Anspruch 12 bis 14, dadurch gekennzeichnet, daß der untere Teil (13') des Giftköderbehälters (13) mit zwei Giftköder-Entnahmeöffnungen (6) versehen ist.

16. Auslegebehälter nach einem der Ansprüche 12 bis 15, dadurch gekennzeichnet, daß der Boden des unteren Teils (13') des Giftköderbehälters (13) eine mittige Ausneh-

0134031

mung (14) zur Befestigung auf einer geeigneten Unterlage aufweist.

17. Auslegebehälter nach Anspruch 16, dadurch gekennzeichnet, daß um die mittige Ausnehmung (14) eine Verstärkung (15) verläuft.

18. Auslegebehälter nach einem der Ansprüche 12 bis 17, dadurch gekennzeichnet, daß der obere Teil (13'') des
Giftköderbehälters (13) auf der Innenseite einen Schütttrichter (24) aufweist.

19. Auslegebehälter nach Anspruch 18, dadurch gekennzeichnet, daß der Schütttrichter (24) nach unten konisch
verläuft.

20. Auslegebehälter nach einem der Ansprüche 12 bis 19, dadurch gekennzeichnet, daß im oberen Teil (13'') des
Giftköderbehälters (13) ein Steg (17) eingespritzt ist.

21. Auslegebehälter nach Anspruch 20, dadurch gekennzeichnet, daß der obere Teil des Steges (17) in gleicher
Höhe wie die freie Stirnseite des oberen Teils (13'')
des Giftköderbehälters (13) liegt.

22. Auslegebehälter nach Anspruch 20 oder 21, dadurch gekennzeichnet, daß im Steg (17) eine mittige Öffnung (19)
mit einer umlaufenden Verstärkung (20) zur Aufnahme der
Deckelverschraubung (21) angeordnet ist.

23. Auslegebehälter nach einem der Ansprüche 12 bis 22, dadurch gekennzeichnet, daß der Deckel (22) an seinem
äußeren Rand mit einer unteren Nase (23) zur Seiten-

0134031

führung beim Aufsetzen auf den Giftköderbehälter (13)
versehen ist.

24. Auslegebehälter nach einem der Ansprüche 12 bis 23, dadurch gekennzeichnet, daß an der Außenseite des unteren
(13') und des oberen Teils (13'') des Giftköderbehälters (13) je eine umlaufende Profilierung (16) angeordist, die in die an der zum Giftköderbehälter (13) weisenden Innenwandung des Lauftunnels (5) angeordneten
Sicherheitsringlippen (10) einsetzbar sind.

25. Auslegebehälter nach Anspruch 24, dadurch gekennzeichnet, daß die Profilierungen (16) an dem unteren Teil
(13') des Giftköderbehälters (13) nach oben weisend
und die am oberen Teil (13'') nach unten weisend angeordnet sind.

26, Auslegebehälter nach Anspruch 5 und 6, dadurch gekennzeichnet, daß die Haltestege (29) im Randbereich der
Einschlupföffnungen (3) angeordnet sind.

0134031

Fig. 1

Fig. 2

Fig. 3

Fig. 4